# EUROPÄISCHE PATENTSCHRIFT

(11) **EP 3 272 620 B1**
(45) Veröffentlichungstag und Bekanntmachung des Hinweises auf die Patenterteilung: **17.06.2020**
(21) Anmeldenummer: 16199110.4
(22) Anmeldetag: 16.11.2016
(51) Int. Cl.: B62B 3/00, B62B 5/06

(54) **ROLLBEHÄLTER**
ROLLER CONTAINER
CONTENEUR ROULANT

(30) Priorität: 18.07.2016 DE 202016103882 U
(43) Veröffentlichungstag der Anmeldung: 24.01.2018
(73) Patentinhaber: Feil GmbH, 59909 Bestwig-Nuttlar (DE)
(72) Erfinder: Jostkleigrewe, Heinrich, 33442 Herzebrock-Clarholz (DE)
(74) Vertreter: Nunnenkamp, Jörg

(56) Entgegenhaltungen:
- EP-A1- 1 120 326
- DE-A1- 2 754 562
- DE-A1- 4 012 728
- DE-U- 1 994 644
- DE-U1-202011 104 859

## Beschreibung

Die Erfindung betrifft einen Rollbehälter, mit einer auf drehbaren Rollen gelagerten Basis, ferner mit einem auf der Basis angeordneten Gitterwandgestell, und mit zumindest einer Rangierhandhabe am Gitterwandgestell.

Rollbehälter oder auch Rollwagen werden typischerweise eingesetzt, um Stückgüter aufzunehmen und zu transportieren. Beispielsweise können sich auf den Rollbehältern Lebensmittel befinden, die von einem LKW abgeladen und in ein zugehöriges Geschäft gebracht werden. Nach dem Einschlichten der Lebensmittel in entsprechende Regale im Geschäft, wird der fragliche Rollbehälter im Regelfall zusammengeklappt oder werden mehrere Rollbehälter nestend zusammengeschoben. Anschließend werden die Rollbehälter typischerweise zurücktransportiert und erneut befüllt.

So kennt man im Stand der Technik nach der DE 1 994 644 einen zusammenfahrbaren Rollbehälter, welcher mit einer hochklappbaren Ladeplatte bzw. Basis und zwei sich gegenüberliegenden hochstehenden Seitenteilen ausgerüstet ist. Beim Hochschwenken der Ladeplatte bzw. Basis werden die Seitenteile parallel zueinander zusammengefahren.

Bei einer anderen Variante entsprechend der EP 1 762 456 A1 lässt sich die Basis in eine Ruhe- sowie Arbeitsstellung überführen. Dazu ist die Basis gelenkig an das Gitterwandgestell angeschlossen. Dadurch können mehrere der Rollbehälter nestend ineinander geschoben werden.

Neben solchen nestbaren Rollbehältern werden in der Praxis auch standardisierte Rollbehälter eingesetzt, die nicht nestbar sind. Diese Rollbehälter werden bei Nichtgebrauch und zur Leergutrückführung ineinander gestapelt. Die Stapelung wird so vorgenommen, dass ein leerer Rollbehälter um 180° auf den Kopf gestellt in einen vorhandenen Behälter eingesetzt wird. Eine solche Vorgehensweise setzt voraus, dass Seitenholme des Gitterwandgestells gerade verlaufen.

Die zuvor beschriebenen Rollbehälter und auch aus der Praxis bekannte Rollbehälter werden im Allgemeinen von Bedienpersonen so bewegt, dass beispielsweise die Seitenholme des Gitterwandgestells ergriffen werden und als gleichsam Rangierhandhaben fungieren. Da die Seitenholme des Gitterwandgestells das fragliche Gestell außen begrenzen, besteht bei einer solchen Handhabung die Gefahr, dass der Bediener seine Finger beispielsweise bei schmalen Türöffnungen, am Aufzug etc. einklemmt oder doch zumindest Verletzungen am Handrücken möglich sind. Aus diesem Grund hat man in der Praxis bereits geringfügig modifizierte Gitterwandgestelle eingesetzt, bei welchen die frontseitigen Seitenholme nach innen gebogen sind und so als Rangierhandhabe fungieren. Allerdings führen diese nach innen gebogenen Seitenholme dazu, dass eine von den Seitenholmen begrenzte Befüllöffnung des Gitterwandgestells im Querschnitt kleiner als bisher ausgelegt ist. Hieraus können Probleme beim Be- und Entladen der Rollbehälter resultieren. Außerdem verhindern die nach innen gebogenen Seitenholme, dass die zuvor beschriebenen standardisierten Rollbehälter über Kopf ineinander gestapelt werden können.

Im gattungsbildenden Stand der Technik nach der DE 27 54 562 A1 wird ein Rangierhandgriff an einem fahrbaren Behälter zum Transport von Stückgütern beschrieben, welcher gelenkig an eine Behälterwand angeschlossen ist. Ein solcher fest installierter Rangierhandgriff lässt sich bei Rollbehältern praktisch nur an einer geschlossenen Rückwand des Gitterwandgestells gegenüberliegend zur Befüllöffnung anbringen. Dadurch ist die Handhabung einerseits erschwert. Andererseits kann diese Lösung nicht auf Gitterwandgestelle übertragen werden, die frontseitig und rückseitig mit einer jeweiligen Befüllöffnung ausgerüstet sind. Ganz abgesehen davon, führt ein solcher fest installierter Rangierhandgriff bzw. eine entsprechende Rangierhandhabe zu einem erhöhten Gewicht des Rollbehälters, welches einer einfachen Handhabung ebenfalls abträglich ist. Hier will die Erfindung insgesamt Abhilfe schaffen.

Der Erfindung liegt das technische Problem zugrunde, einen derartigen Rollbehälter so weiterzuentwickeln, dass die Handhabung einfach gelingt, der Rollbehälter nach wie vor leicht ausgelegt ist und insbesondere die eine oder die beiden Befüllöffnungen hinsichtlich ihres Querschnittes nicht eingeengt sind.

Zur Lösung dieser technischen Problemstellung ist ein gattungsgemäßer Rollbehälter im Rahmen der Erfindung dadurch gekennzeichnet, dass die Rangierhandhabe als lösbar in das Gitterwandgestell einhängbarer Handgriff ausgebildet ist, welcher nicht fest an dem Rollbehälter sondern bedarfsweise angebracht wird, sodass ein Bediener je nach Vorliebe die Anbringungshöhe des Handgriffes variieren kann.

Im Regelfall kommen zwei Handgriffe zum Einsatz, die jeweils lösbar in das Gitterwandgestell eingehängt werden. Tatsächlich verfügt der jeweilige Handgriff nach vorteilhafter Ausgestaltung über einen Befestigungssteg und eine Handhabe. Der Befestigungssteg ist meistens im Querschnitt U-förmig ausgelegt und umgreift in montiertem Zustand im Allgemeinen einen Seitenholm des Gitterwandgestells. Auf diese Weise kann der jeweilige Handgriff flexibel an dem betreffenden Seitenholm des Gitterwandgestells angebracht werden, und zwar lösbar. Tatsächlich verfügt das fragliche Gitterwandgestell meistens über wenigstens zwei Seitenteile, die jeweils einen umlaufenden Rahmen aufweisen. Als Folge hiervon ist das Gitterwandgestell im Allgemeinen mit vier Seitenholmen an jeder Ecke des Gitterwandgestells ausgerüstet. Zwischen den beiden Seitenteilen können jeweils eine frontseitige und eine rückwärtige Befüllöffnung realisiert sein. Es ist aber auch möglich, dass nur eine frontseitige Befüllöffnung vorgesehen ist. In diesem Fall ist im Bereich der rückwärtigen Befüllöffnung eine Rückwand realisiert.

Jedenfalls eröffnet die Erfindung durch das lösbare Einhängen des fraglichen Handgriffs in das Gitterwandgestell eine flexible Handhabung, und zwar ohne dass die frontseitige oder auch rückseitige Befüllöffnung oder beide Befüllöffnungen in ihrem zum Be- und Entladen verfügbaren Querschnitt in irgendeiner Weise eingeschränkt werden. Hinzukommt, dass der fragliche Handgriff nicht fest an dem Rollbehälter angebracht wird, sondern lösbar und folglich bedarfsweise. Dadurch wird das Gesamtgewicht des Rollbehälters nicht negativ beeinflusst und folglich seine generelle Handhabung im Vergleich zum Stand der Technik beibehalten.

Da darüber hinaus der Handgriff lösbar in das Gitterwandgestell eingehängt werden kann, besteht die weitere Möglichkeit, dass der Bediener je nach Vorliebe die Anbringungshöhe des Handgriffes variieren kann. Denn der Befestigungssteg als Bestandteil des Handgriffes ist im Querschnitt U-förmig ausgebildet. Außerdem umgreift der Befestigungssteg in montiertem Zustand den zuvor bereits angesprochenen Seitenholm des Gitterwandgestells. Zu diesem Zweck verfügt der Befestigungssteg nach vorteilhafter Ausgestaltung über eine Einhängeöffnung für eine darin in montiertem Zustand eingreifende Querstrebe des Gitterwandgestells.

Dadurch kann der Befestigungssteg je nach Position der Querstrebe des Gitterwandgestells in unterschiedlichen Höhen lösbar an dem fraglichen Seitenholm festgelegt werden. Hierdurch können auch kleinwüchsige oder großwüchsige Bedienpersonen die optimale Position für den Handgriff zum Rangieren des erfindungsgemäßen Rollbehälters finden und ihren Präferenzen entsprechend einrichten.

Als weiterer Vorteil ist zu nennen, dass der lösbar in das Gitterwandgestell einhängbare Handgriff keinerlei Modifikationen am Rollbehälter erfordert. Folglich kann der fragliche Handgriff auch bei vorhandenen Rollbehältern genutzt werden und führt unmittelbar zur Verbesserung der Sicherheit und dazu, dass Verletzungen einer Bedienperson ausgeschlossen werden können. Als weiterer Vorteil ist zu nennen, dass der lösbar in das Gitterwandgestell einhängbare Handgriff mit seinem im Querschnitt U-förmigen Befestigungssteg Seitenholme in verschiedener Ausprägung problemlos umgreifen kann. So können die Seitenholme grundsätzlich aus einem Quadratrohr, Rechteckrohr oder Rundrohr gefertigt sein. In sämtlichen Fällen lässt sich der Handgriff lösbar in das Gitterwandgestell unter Umgreifen des Seitenholms einhängen.

Damit sich die Einhängeöffnung für die darin in montiertem Zustand eingreifende Querstrebe des Gitterwandgestells von der fraglichen Querstrebe nicht löst, ist die Einhängeöffnung im Regelfall mit einer die Querstrebe übergreifenden Nase ausgerüstet. Die Querstrebe wird folglich in der Einhängeöffnung inklusive der Nase aufgenommen, die zusammengenommen einen Einhängeschlitz für die fragliche Querstrebe definieren und vorgeben. Dieser Einhängeschlitz kann selbstverständlich an die baulichen Gegebenheiten des Gitterwandgestells angepasst werden. Je nach Durchmesser der betreffenden Querstrebe kann an dieser Stelle mit unterschiedlich großen Einhängeschlitzen gearbeitet werden.

Selbstverständlich kann der Einhängeschlitz in diesem Zusammenhang auch an verschieden ausgelegte Querstreben angepasst werden. So können Querstreben aus einem Rundrohr, Quadratrohr, einem Rechteckrohr oder auch einem Flacheisen realisiert sein. In diesen sämtlichen Fällen ist der Einhängeschlitz in der Lage, die Querstrebe in seinem Innern aufzunehmen. Das setzt lediglich etwaige Modifikationen am Einhängeschlitz voraus.

Da typischerweise jedoch auf mehr oder minder genormte Gitterwandgestelle zurückgegriffen wird, kann der fragliche Handgriff praktisch universell zum Einsatz kommen. Hinzukommt, dass die Handhabe und der Befestigungssteg winklig zueinander angeordnet sind. Tatsächlich schließen die Handhabe und der Befestigungssteg in Aufsicht im Allgemeinen einen spitzen Winkel zueinander ein. Tatsächlich werden im Rahmen der Erfindung an dieser Stelle Winkel beobachtet, die jedenfalls deutlich unterhalb von 90° angesiedelt sind. Beispielsweise werden Winkel im Bereich zwischen 50° und 80° beobachtet. Auf diese Weise ist die Handhabe in montiertem Zustand nach innen geneigt, in Richtung auf die Befüllöffnung des Gitterwandgestells an den Befestigungssteg angeschlossen.

Durch diese Neigung der Handhabe nach innen in Richtung auf die Befüllöffnung wird sichergestellt, dass ein die Handhabe ergreifender Bediener mit seinen Handflächen nicht mit beispielsweise engen Türöffnungen, Aufzugsöffnungen etc. kollidiert. Als Folge hiervon können auch keine Handverletzungen mehr auftreten.

Zugleich wird die Größe der jeweiligen Befüllöffnung des Gitterwandgestells nicht negativ beeinflusst. Denn zum Be- und Entladen des Gitterwandgestells steht nach wie vor die gesamte Größe der Befüllöffnung ohne Einschränkung zur Verfügung. Erst dann, wenn der erfindungsgemäße Rollbehälter beispielsweise vollständig be- oder entladen ist, wird der jeweilige Handgriff bzw. werden die beiden Handgriffe in das Gitterwandgestell eingehängt. Während des Be- und Entladens sind demgegenüber der Handgriff bzw. die beiden Handgriffe entfernt, so dass die Befüllöffnung in vollständiger Größe zur Verfügung steht.

Die Handhabe ist im Allgemeinen als U-förmiger Bügel ausgebildet. Der U-förmige Bügel ist wie beschrieben an den Befestigungssteg angeschlossen, wobei der fragliche Bügel bzw. die Handhabe und der Befestigungssteg in Aufsicht den zuvor bereits beschriebenen spitzen Winkel zueinander einschließen. Als Material zur Herstellung des betreffenden Handgriffes empfiehlt die Erfindung im Regelfall Metall oder auch Stahl. Grundsätzlich können die fraglichen Handgriffe aber auch aus Kunststoff hergestellt werden.

Um die Handgriffe oder den einen Handgriff jeweils zur Verfügung zu haben, ist es denkbar, den Handgriff beispielsweise über eine Kette oder ein Seil an den fraglichen Rollbehälter anzuschließen. Im Regelfall und nach besonders bevorzugter Ausführungsform werden die Handgriffe jedoch in Verbindung mit einem vom Bediener getragenen Gürtelhalter angeboten und eingesetzt. Dieser Gürtelhalter ist so ausgelegt, dass hieran der eine oder die beiden Handgriffe festgelegt werden können, um für den beschriebenen Einsatz unmittelbar zur Verfügung zu stehen. Tatsächlich benötigt nämlich jeder Bediener typischerweise nur einen Handgriff bzw. ein Paar Handgriffe für sämtliche in einem Geschäft oder Laden vorhandenen Rollbehälter.

Selbstverständlich sind auch andere Varianten denkbar. So kann die Bedienperson beispielsweise eine Gürteltasche mit sich führen, in welcher die fraglichen Handgriffe bevorratet werden. Außerdem können die Handgriffe beispielsweise an verschiedenen Positionen im Laden oder Logistikzentrum schlicht und ergreifend für den Einsatz bevorratet werden. In jedem Fall lassen sich die erfindungsgemäßen Rollbehälter sicher rangieren und besteht keine Quetschgefahr für die Hände des Bedieners mehr. Da der jeweilige Handgriff lösbar in das Gitterwandgestell eingehängt werden kann, ist das Be- und Entladen nicht eingeschränkt. Schließlich lassen sich die fraglichen und lösbar einhängbaren Handgriffe in jeder gewünschten Position mit dem Gitterwandgestell lösbar verbinden, so dass ergonomische Aspekte und die Größe sowie etwaige Vorlieben des Bedieners optimal berücksichtigt werden. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: einen erfindungsgemäßen Rollbehälter,
- Fig. 2: den lösbar am Rollbehälter anbringbaren Handgriff in einer perspektivischen Einzelansicht und
- Fig. 3: einen schematischen Querschnitt durch den Gegenstand nach Fig. 2.

In den Figuren ist ein Rollbehälter dargestellt. Mit Hilfe des Rollbehälters können Stückgüter transportiert werden. Bei den Stückgütern mag es sich nicht einschränkend um Lebensmittel handeln. Der Rollbehälter setzt sich in seinem grundsätzlichen Aufbau aus einer Basis 1 und einem auf der Basis 1 angeordneten Gitterwandgestells 2 zusammen.

Die Basis 1 ist auf drehbaren Rollen 3 gelagert. Nach dem Ausführungsbeispiel wird die Basis 1 auf insgesamt vier Rollen 3 aufgenommen. Von den vier Rollen 3 können zwei Rollen 3 als Bockrollen und zwei Rollen 3 als Lenkrollen ausgelegt sein. Es ist aber möglich, insgesamt mit vier Lenkrollen als Rollen 3 zu arbeiten.

Die Basis 1 ist als Kunststoffboden ausgebildet, in welchen zwei das Gitterwandgestell 2 definierende Seitenteile eingesteckt werden. Die Seitenteile verfügen über einen jeweils umlaufenden Rahmen, welcher insgesamt vier Seitenholme 2a an sämtlichen vier Ecken des quaderförmigen Gitterwandgestells 2 aufweist. Außerdem sind Querstreben 2b in unterschiedlicher Höhe vorgesehen.

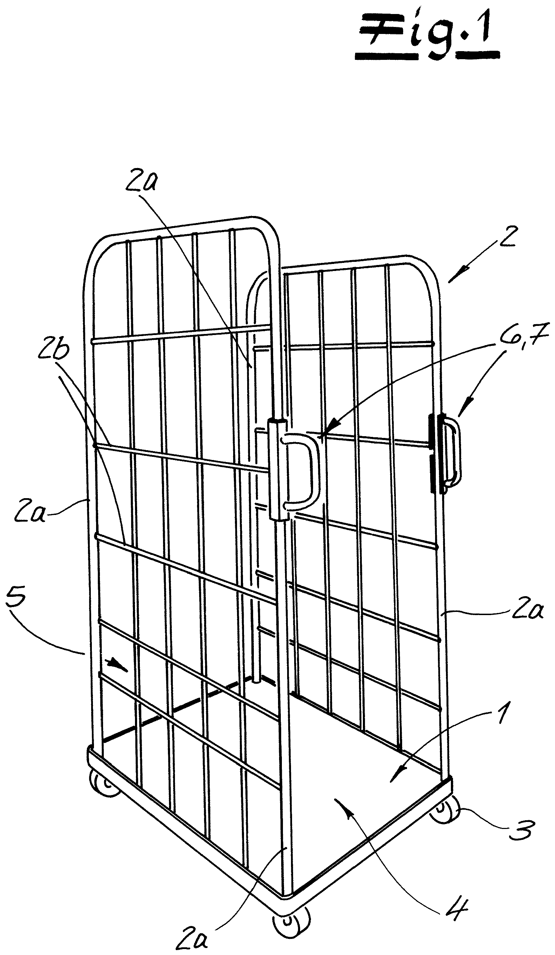

Da sich das Gitterwandgestell 2 nach dem Ausführungsbeispiel in der Fig. 1 letztlich aus zwei Seitenteilen zusammensetzt, werden eine frontseitige Befüllöffnung 4 und eine rückwärtige Befüllöffnung 5 definiert. Anstelle der rückwärtigen Befüllöffnung 5 kann auch eine Rückwand als Bestandteil des Gitterwandgestells 2 vorgesehen werden. Für die nachfolgenden Betrachtungen von Bedeutung ist der Umstand, dass die jeweilige Befüllöffnung 4, 5 im Querschnitt rechteckförmig ausgelegt ist und von den beiden randseitigen Seitenholmen 2a jeweils begrenzt wird. Selbstverständlich ist es auch möglich, dass die Befüllöffnung 4, 5 zum Diebstahlschutz mit einer Tür ausgerüstet ist, was jedoch nicht dargestellt ist. Das ändert jedoch nichts an den nachfolgenden Betrachtungen.

Der erfindungsgemäße Rollbehälter verfügt über eine am Gitterwandgestell 2 vorgesehene Rangierhandhabe 6, 7. Erfindungsgemäß ist die Rangierhandhabe 6, 7 als lösbar in das Gitterwandgestell 2 einhängbarer Handgriff 6, 7 ausgebildet. Nach dem Ausführungsbeispiel sind jeweils zwei lösbar in das Gitterwandgestell einhängbare Handgriffe 6, 7 realisiert, die ausweislich der Fig. 1 jeweils den die frontseitige Befüllöffnung 4 begrenzenden Seitenholm 2a des Gitterwandgestells 2 umgreifen.

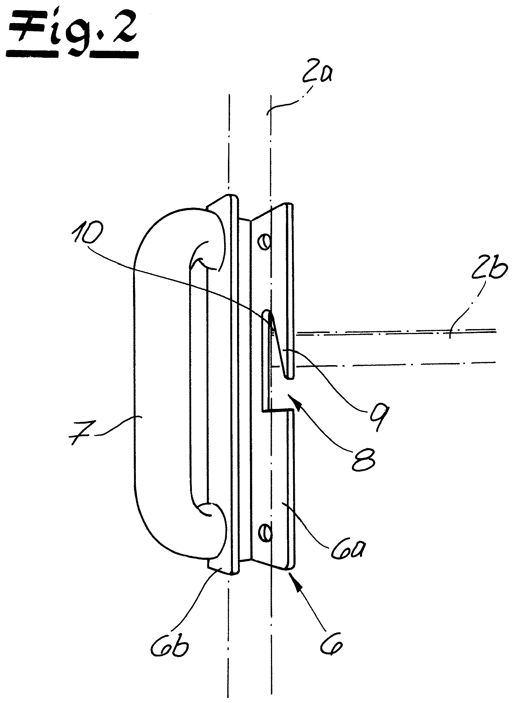

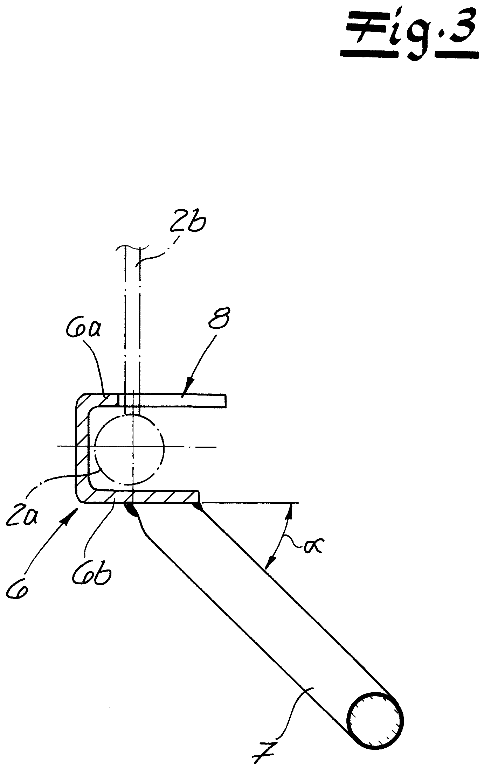

Zu diesem Zweck setzt sich der betreffende Handgriff 6, 7 ausweislich der Fig. 2 und 3 aus einerseits einem Befestigungssteg 6 und andererseits einer Handhabe 7 zusammen. Die Handhabe 7 ist als U-förmiger Bügel ausgebildet und kann folglich von einem Bediener bzw. dessen Hand umgriffen werden. Der Befestigungssteg 6 verfügt seinerseits über einen U-förmigen Querschnitt, wie man insbesondere anhand der Schnittdarstellung in der Fig. 3 erkennt.

Tatsächlich ist der Befestigungssteg 6 mit einem längeren U-Schenkel 6a und einem kürzeren U-Schenkel 6b ausgerüstet. In montiertem Zustand umgreift der Befestigungssteg 6 den Seitenholm 2a des Gitterwandgestells 2. Außerdem verfügt der Befestigungssteg 6 über eine Einhängeöffnung 8 für eine darin in montiertem Zustand eingreifende Querstrebe 2b des Gitterwandgestells 2. Die Einhängeöffnung 8 ist im Ausführungsbeispiel am längeren U-Schenkel 6a des Befestigungssteges 6 ausgebildet.

Außerdem ist die Einhängeöffnung 8 mit einer die Querstrebe 2b übergreifenden Nase 9 ausgerüstet. Auf diese Weise formen die fragliche Nase 9 und die Einhängeöffnung 8 einen Einhängeschlitz 10, in welchem die Querstrebe 2b in montiertem Zustand des Handgriffes 6, 7 am Gitterwandgestell 2 aufgenommen wird. In diesem montierten Zustand umgreift der Befestigungssteg 6 zugleich den Seitenholm 2a. Um folglich den Handgriff 6, 7 vom Gitterwandgestell 2 zu lösen, muss der Handgriff 6, 7 angehoben werden, bis die Querstrebe 2b den Einhängeschlitz 10 verlässt und über die Einhängeöffnung 8 freikommt. Gleiches gilt dann auch für den Handgriff 6, 7 insgesamt.

Insbesondere anhand der Darstellung in der Fig. 3 erkennt man, dass die Handhabe 7 bzw. der an dieser Stelle realisierte U-förmige Bügel 7 und der Befestigungssteg 6 winklig zueinander angeordnet sind. Tatsächlich ist die Handhabe bzw. der U-förmige Bügel 7 unter einem spitzen Winkel α an den Befestigungssteg 6 angeschlossen. Der fragliche spitze Winkel α wird zwischen dem kurzen U-Schenkel 6b und dem daran angeschlossenen U-förmigen Bügel 7 beobachtet. Nach dem Ausführungsbeispiel kann der spitze Winkel α Werte im Bereich von ca. 50° bis 80° annehmen.

Dadurch ist insgesamt gewährleistet, dass die Handhabe 7 in montiertem Zustand des Handgriffes 6, 7 nach innen geneigt in Richtung auf die Befüllöffnung 4 des Gitterwandgestells 2 an den Befestigungssteg 6 angeschlossen ist. Sobald folglich ein Bediener den U-förmigen Bügel bzw. die Handhabe 7 ergreift, ist durch diese Neigung nach innen in Richtung auf die Befüllöffnung 4 im Beispielfall sichergestellt, dass ein Handrücken des Bedieners nicht beispielsweise mit einer Wand, einem Türrahmen, einer Aufzugtür etc. kollidieren kann, so dass Quetschgefahr nicht mehr besteht.

## Patentansprüche

1. Rollbehälter, mit einer auf drehbaren Rollen (3) gelagerten Basis (1), ferner mit einem auf der Basis (1) angeordneten Gitterwandgestell (2), und mit zumindest einer Rangierhandhabe (6, 7) am Gitterwandgestell (2), **dadurch gekennzeichnet, dass**
- die Rangierhandhabe (6, 7) als lösbar in das Gitterwandgestell (2) einhängbarer Handgriff (6, 7) ausgebildet ist, welcher
- nicht fest an dem Rollbehälter sondern bedarfsweise angebracht wird, sodass
- ein Bediener je nach Vorliebe die Anbringungshöhe des Handgriffes (6,7) variieren kann.

2. Rollbehälter nach Anspruch 1, **dadurch gekennzeichnet, dass** der Handgriff (6, 7) mit einem Befestigungssteg (6) und einer Handhabe (7) ausgerüstet ist.

3. Rollbehälter nach Anspruch 2, **dadurch gekennzeichnet, dass** der Befestigungssteg (6) im Querschnitt U-förmig ausgebildet ist.

4. Rollbehälter nach Anspruch 2 oder 3, **dadurch gekennzeichnet, dass** der Befestigungssteg (6) in montiertem Zustand einen Seitenholm (2a) des Gitterwandgestells (2) umgreift.

5. Rollbehälter nach einem der Ansprüche 2 bis 4, **dadurch gekennzeichnet, dass** der Befestigungssteg (6) eine Einhängeöffnung (8) für eine darin in montiertem Zustand eingreifende Querstrebe (2b) des Gitterwandgestells (2) aufweist.

6. Rollbehälter nach Anspruch 5, **dadurch gekennzeichnet, dass** die Einhängeöffnung (8) mit einer die Querstrebe (2b) übergreifenden Nase (9) unter Bildung eines Einhängeschlitzes (10) ausgerüstet ist.

7. Rollbehälter nach einem der Ansprüche 2 bis 6, **dadurch gekennzeichnet, dass** die Handhabe (7) und der Befestigungssteg (6) winklig zueinander angeordnet sind.

8. Rollbehälter nach Anspruch 7, **dadurch gekennzeichnet, dass** die Handhabe (7) und der Befestigungssteg (6) in Aufsicht einen spitzen Winkel (a) zueinander einschließen.

9. Rollbehälter nach einem der Ansprüche 2 bis 8, **dadurch gekennzeichnet, dass** die Handhabe (7) in montiertem Zustand nach innen geneigt in Richtung auf eine Befüllöffnung (4, 5) des Gitterwandgestells (2) an den Befestigungssteg (6) angeschlossen ist.

10. Rollbehälter nach einem der Ansprüche 2 bis 9, **dadurch gekennzeichnet, dass** die Handhabe (7) als U-förmiger Bügel (7) ausgebildet ist.

## Claims

1. A roll container having a base (1) which is mounted on rotatable castors (3), a grating wall frame (2) arranged on the base (1), and at least one manoeuvring handle (6, 7) on the grating wall frame (2), **characterised in that**
- the manoeuvring handle (6, 7) is in the form of a grip (6, 7) which can be hooked detachably into the grating wall frame (2) and
- is attached to the roll container as required rather than permanently, so that
- a user can vary the attachment height of the grip (6, 7) as desired.

2. The roll container according to Claim 1, **characterised in that** the grip (6, 7) is provided with a fastening piece (6) and a handle (7).

3. The roll container according to Claim 2, **characterised in that** the fastening piece (6) has a U-shaped cross-section.

4. The roll container according to Claim 2 or 3, **characterised in that** the fastening piece (6) fits around a side bar (2a) of the grating wall frame (2) when in the mounted state.

5. The roll container according to any one of Claims 2 to 4, **characterised in that** the fastening piece (6) has a hooking opening (8) for a cross strut (2b) of the grating wall frame (2) which fits therein when in the mounted state.

6. The roll container according to Claim 5, **characterised in that** the hooking opening (8) is provided with a nose (9) which fits over the cross strut (2b), forming a hooking slot (10).

7. The roll container according to any one of Claims 2 to 6, **characterised in that** the handle (7) and the fastening piece (6) are arranged at an angle to each other.

8. The roll container according to Claim 7, **characterised in that** the handle (7) and the fastening piece (6) form an acute angle (α) to each other when viewed from above.

9. The roll container according to any one of Claims 2 to 8, **characterised in that** the handle (7) is attached to the fastening piece (6) in a manner inclined inward towards a loading opening (4, 5) of the grating wall frame (2) when in the mounted state.

10. The roll container according to any one of Claims 2 to 9, **characterised in that** the handle (7) is in the form of a U-shaped bow (7).

## Revendications

1. Rolltainer, pourvu d'une base (1) logée sur des roulettes (3) rotatives, pourvu par ailleurs d'un châssis à parois grillagées (2) placé sur la base (1), et pourvu d'au moins une manette de manœuvre (6, 7) sur le châssis à parois grillagées (2), **caractérisé en ce que**
- la manette de manœuvre (6, 7) est conçue sous la forme d'une poignée (6, 7) susceptible d'être accrochée de manière amovible dans le châssis à parois grillagées (2), laquelle
- n'est pas montée de manière fixe sur le rolltainer, mais se monte en cas de besoin, de telle sorte
- qu'en fonction de ses préférences, un utilisateur puisse faire varier la hauteur de montage de la poignée (6, 7).

2. Rolltainer selon la revendication 1, **caractérisé en ce que** la poignée (6, 7) est équipée d'une barrette de fixation (6) et d'une manette (7).

3. Rolltainer selon la revendication 2, **caractérisé en ce que** la barrette de fixation (6) est conçue avec une section transversale en forme de U.

4. Rolltainer selon la revendication 2 ou 3, **caractérisé en ce qu'**en position montée, la barrette de fixation (6) entoure un montant latéral (2a) du châssis à parois grillagées (2).

5. Rolltainer selon l'une quelconque des revendications 2 à 4, **caractérisé en ce que** la barrette de fixation (6) comporte un orifice d'accrochage (8) pour une entretoise transversale (2b) du châssis à parois grillagées (2) qui s'engage dans celui-ci en position montée.

6. Rolltainer selon la revendication 5, **caractérisé en ce que** l'orifice d'accrochage (8) est équipé d'un ergot (9) qui recouvre l'entretoise transversale (2b) en formant une fente d'accrochage (10).

7. Rolltainer selon l'une quelconque des revendications 2 à 6, **caractérisé en ce que** la manette (7) et la barrette de fixation (6) sont placées sous un angle mutuel.

8. Rolltainer selon la revendication 7, **caractérisé en ce que**, vues en élévation, la manette (7) et la barrette de fixation (6) incluent l'une par rapport à l'autre un angle aigu (α).

9. Rolltainer selon l'une quelconque des revendications 2 à 8, **caractérisé en ce qu'**en position montée, la manette (7) est raccordée sur la barrette de fixation (6) en inclinaison vers l'intérieur, en direction d'une ouverture de remplissage (4, 5) du châssis à parois grillagées (2).

10. Rolltainer selon l'une quelconque des revendications 2 à 9, **caractérisé en ce que** la manette (7) est conçue sous la forme d'un étrier (7) en forme de U.
